(19) Europäisches Patentamt
European Patent Office
Office européen des brevets

(11) **EP 3 185 618 A1**

(12) **EUROPEAN PATENT APPLICATION**
published in accordance with Art. 153(4) EPC

(43) Date of publication:
**28.06.2017 Bulletin 2017/26**

(21) Application number: **15844853.0**

(22) Date of filing: **18.09.2015**

(51) Int Cl.:
**H04W 48/18** (2009.01)      **H04W 84/12** (2009.01)
**H04W 88/06** (2009.01)

(86) International application number:
**PCT/JP2015/076680**

(87) International publication number:
**WO 2016/047594 (31.03.2016 Gazette 2016/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **25.09.2014 US 201462055428 P**

(71) Applicant: **KYOCERA Corporation**
**Kyoto 612-8501 (JP)**

(72) Inventors:
• **NAGASAKA, Yushi**
**Kyoto-shi**
**Kyoto 612-8501 (JP)**

• **FUJISHIRO, Masato**
**Kyoto-shi**
**Kyoto 612-8501 (JP)**
• **KASHIWASE, Susumu**
**Kyoto-shi**
**Kyoto 612-8501 (JP)**
• **CHANG, Henry**
**San Diego, California 92123 (US)**

(74) Representative: **Schwabe - Sandmair - Marx**
**Patentanwälte Rechtsanwalt**
**Partnerschaft mbB**
**Joseph-Wild-Straße 20**
**81829 München (DE)**

(54) **WIRELESS TERMINAL**

(57)      A radio terminal that performs traffic steering between a mobile communication network and a wireless LAN, comprising: a receiver configured to receive, as determination parameters for determining whether or not to perform the traffic steering, dedicated parameters notified individually from a cell provided in the mobile communication network; and a controller configured to discard the dedicated parameters when performing a connection process on the cell after transition to an idle state on the cell.

FIG. 6

**Description**

**TECHNICAL FIELD**

The present invention relates to a radio terminal used in a system which performs a switching process of switching a standby destination or a connection destination between a coverage area of a mobile communication network and a coverage area of a wireless LAN, a radio base station therefor, and a processor used in the radio terminal.

**BACKGROUND ART**

Conventionally, there is proposed a switching process (a network selection and a traffic steering) of switching a standby destination or a connection destination between a mobile communication network and a wireless LAN when a coverage area of the mobile communication network represented by LTE (Long Term Evolution) and a coverage area of the wireless LAN overlap at least partially. Specifically, the switching process is performed on the basis of whether or not first information at a mobile communication network side satisfies a first condition and second information at a wireless LAN side satisfies a second condition.

Here, the first information at a mobile communication network side is a measurement result (RSRPmeas) of a signal level of a received signal (RSRP: Reference Signal Received Power) and a measurement result (RSRQmeas) of a signal quality of a received signal (RSRQ: Reference Signal Received Quality), for example. The second information at a wireless LAN side is a channel utilization value of a wireless LAN, a backhaul value of a wireless LAN, and a signal intensity of a received signal (RSSI: Received Signal Strength Indicator), for example.

Determination parameters for determining whether or not to perform a switching process of switching a standby destination or a connection destination between a mobile communication network and a wireless LAN is notified to a radio terminal from a radio base station provided in the mobile communication network. As the determination parameters, there are dedicated parameters individually notified to a radio terminal and broadcast parameters broadcast to a radio terminal.

It is noted that types of a value included in the dedicated parameters is approximately the same as types of a value included in the broadcast parameters. Further, when the radio terminal receives, in addition to the broadcast parameters, the dedicated parameters, the dedicated parameters is applied preferentially over the broadcast parameters.

Under such a background, in 3GPP (3rd Generation Partnership Project) which is a project aiming to standardize a mobile communication network, there is proposed a concept that when transition is made to an idle state along with a switching process (hereinafter, offload process) of switching a standby destination or a connection destination from a mobile communication network to a wireless LAN, a predetermined timer is started and the dedicated parameters are applied until the predetermined timer expires.

In the above-described 3GPP, there is proposed a concept that when a connection process is performed on the same cell as the cell which notifies the dedicated parameters, the dedicated parameters are held until the predetermined timer expires.

However, the radio base station provided in the mobile communication network may discard the dedicated parameters notified to the radio terminal when the radio terminal is transitioned by the offload process from a connected state to an idle state. Therefore, when the connection process (hereinafter, onload process) is performed on the same cell as the cell which notifies the dedicated parameters after the offload process is performed, the radio base station may not hold the dedicated parameters notified to the radio terminal.

That is, when a case is assumed where the onload process is performed after the offload process is performed, the radio base station may not be capable of grasping a state of the dedicated parameters. The state of the dedicated parameters is whether or not the radio terminal holds the dedicated parameters and/or values of the dedicated parameters held by the radio terminal.

**CITATION LIST**

**NON PATENT LITERATURE**

[NPL 1] TS36. 304V12.1.0

**SUMMARY OF INVENTION**

A first aspect is summarized to a radio terminal that performs traffic steering between a mobile communication network and a wireless LAN, comprising: a receiver configured to receive, as determination parameters for determining whether or not to perform the traffic steering, dedicated parameters notified individually from a cell provided in the mobile communication network; and a controller configured to discard the dedicated parameters when performing a connection process on the cell after transition to an idle state on the cell.

## BRIEF DESCRIPTION OF DRAWINGS

[Fig. 1] Fig. 1 is a diagram showing a communication system 1 according to a first embodiment.

[Fig. 2] Fig. 2 is a block diagram showing a radio terminal 10 according to the first embodiment.

[Fig. 3] Fig. 3 is a block diagram showing a radio base station 100 according to the first embodiment.

[Fig. 4] Fig. 4 is a diagram for describing a determination (mobile communication network side) of a switching process according to the first embodiment.

[Fig. 5] Fig. 5 is a diagram for describing a determination (wireless LAN side) of a switching process according to the first embodiment.

[Fig. 6] Fig. 6 is a sequence diagram showing a communication method according to the first embodiment.

[Fig. 7] Fig. 7 is a sequence diagram showing a communication method according to a first modification.

[Fig. 8] Fig. 8 is a sequence diagram showing a communication method according to a second modification.

## DESCRIPTION OF EMBODIMENT

A radio terminal and a radio base station according to embodiments of the present invention will be described below with reference to the drawings. It is noted that the same or similar elements in the following drawings are indicated by the same or similar reference numerals.

However, it should be noted that the drawings are schematic, and the ratio of each dimension and the like are different from those in reality. The specific dimensions thus should be taken into consideration in accordance with the following explanations. Moreover, the drawings also include portions having different dimensional relationships and ratios from each other.

[Summary of embodiment]

Firstly, a radio terminal according to a first aspect of embodiment performs a switching process of switching a standby destination or a connection destination between a mobile communication network and a wireless LAN when at least a part of a coverage area of the wireless LAN overlaps a coverage area of the mobile communication network. The radio terminal comprises a receiver configured to receive, as determination parameters for determining whether or not to perform the switching process, dedicated parameters notified individually from a cell provide in the mobile communication network; and a controller configured to discard the dedicated parameters when performing an onload process of performing a connection process on the cell after performing an offload process of switching a standby destination or a connection destination from the mobile communication network to the wireless LAN.

In such an embodiment, the radio terminal discards the dedicated parameters when performing the onload process after performing the offload process. The radio terminal discards the dedicated parameters, and thus, when receiving new broadcast parameters, as the determination parameters, from the radio base station, determines on the basis of the new broadcast parameters whether to perform the switching process. Therefore, when broadcasting the broadcast parameters again, the radio base station 100 is capable of controlling the switching process of the radio terminal, and as a result, it is possible to suppress occurrence of a situation where the radio terminal uses the dedicated parameters not grasped by the radio base station.

It should be noted that when the radio terminal holds the dedicated parameters, even when receiving, as the determination parameters, the broadcast parameters from the radio base station, the dedicated parameters are prioritized over the broadcast parameters, and thus, the dedicated parameters not grasped by the radio base station are used in the radio terminal.

In the first aspect, the controller is configured to hold the dedicated parameters in a period during which a predetermined timer started in response to transition to an idle state along with the offload process is started, and the controller stops the predetermined timer when performing the onload process after performing the offload process.

In the first aspect, the controller stops the predetermined timer when performing the onload process due to quality deterioration of the wireless LAN after performing the offload process.

In the first aspect, the controller discards the dedicated parameters along with the stopping of the timer.

In the first aspect, the controller discards the dedicated parameters when performing the onload process due to quality deterioration of the wireless LAN after performing the offload process.

In the first aspect, the controller does not discard the dedicated parameters but holds the dedicated parameters when performing the onload process due to a cause other than quality deterioration of the wireless LAN after performing the offload process.

Secondly, a radio terminal according to a second aspect of the embodiment performs a switching process of switching a standby destination or a connection destination between a mobile communication network and a wireless LAN when at least a part of a coverage area of the wireless LAN overlaps a coverage area of the mobile communication network. The radio terminal comprises a receiver configured to receive, as determination parameters for determining whether or not to perform the switching process, dedicated parameters notified individually from a cell provided in the mobile communication network; and a transmitter configured to transmit information indicating a state of the dedicated parameters to the radio base station when performing an onload process of performing a connection process on the cell after performing an offload process of switching a standby destination or a connection destination from the mobile communication network to the wireless LAN.

In such an embodiment, the radio terminal transmits the information indicating a state of the dedicated parameters to the radio base station when performing the onload process after performing the offload process. The information indicating a state of the dedicated parameters is, for example, information indicating whether or not the radio terminal holds the dedicated parameters and/or information indicating values of the dedicated parameters held by the radio terminal. Therefore, when the information indicating whether or not the radio terminal holds the dedicated parameters is used as the information indicating a state of the dedicated parameters, the radio base station is capable of specifying the radio terminal that holds the dedicated parameters not grasped by the radio base station. That is, when broadcasting the dedicated parameters again to the radio terminal that holds the dedicated parameters, the radio base station is capable of controlling the switching process of the radio terminal, and as a result, it is possible to suppress occurrence of a situation where the radio terminal uses the dedicated parameters not grasped by the radio base station. It is noted that naturally, when as the information indicating a state of the dedicated parameters, the information indicating a value of the dedicated parameters held by the radio terminal is used, the radio base station is capable of grasping the dedicated parameters held by the radio terminal.

Thirdly, a radio base station according to a third aspect is provide in a mobile communication network, in a system configured to perform a switching process of switching a standby destination or a connection destination between a mobile communication network and a wireless LAN when at least a part of a coverage area of the wireless LAN overlaps a coverage area of the mobile communication network. The radio base station comprises a transmitter configured to transmit, as determination parameters for determining whether or not to perform the switching process, dedicated parameters notified individually to a radio terminal; and a controller configured to hold the dedicated parameters notified to a radio terminal that performs an offload process of switching a standby destination or a connection destination from the mobile communication network to the wireless LAN or performs transition to an idle state, over a constant period since the offload process is performed or the transition to the idle state is made.

In such an embodiment, the radio base station holds the dedicated parameters notified to the radio terminal that performs the offload process or transitions to the idle state over a constant period since the offload process is performed or transition to the idle state is made. Therefore, even when the radio terminal performs the onload process after performing the offload process, a possibility is increased that the radio base station holds the dedicated parameters notified to the radio terminal that performs the offload process. In other words, occurrence of a situation is suppressed where the radio terminal uses the dedicated parameters not grasped by the radio base station.

In the third aspect, the controller holds the dedicated parameters to correspond to identification information assigned to the radio terminal before performing the offload process.

[First Embodiment]

(Communication system)

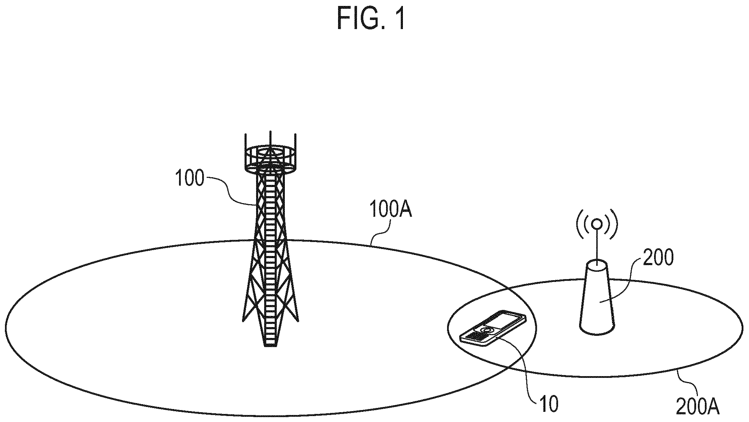

A mobile communication system according to a first embodiment will be described, below. Fig. 1 is a diagram showing a communication system 1 according to the first embodiment.

As shown in Fig. 1, the communication system 1 includes a radio base station 100 and an access point 200. Further, the communication system 1 includes a radio terminal 10 capable of connecting to the radio base station 100 or the access point 200.

The radio terminal 10 is a mobile telephone or a terminal such as a tablet computer. The radio terminal 10 has a function of performing radio communication with the access point 200, in addition to a function of performing radio communication with the radio base station 100.

The radio base station 100 has a first coverage area 100A, and in the first coverage area 100A, provides a mobile communication service represented by LTE (Long Term Evolution). The radio base station 100 manages one or a plurality of cells, and the first coverage area 100A is configured by one or a plurality of cells. The radio base station 100 is an entity of a mobile communication network. It is noted that a cell may be thought of as a term to indicate a geographical area, and may also be thought of as a function of performing radio communication with the radio terminal 10.

The access point 200 has a second coverage area 200A, and in the second coverage area 200A, provides a wireless LAN service. The access point 200 is an entity of a wireless LAN. At least a part of the second coverage area 200A overlaps the first coverage area 100A. A whole of the second coverage area 200A may overlap the first coverage area 100A. Generally, the second coverage area 200A is smaller than the first coverage area 100A.

(Application scene)

In the first embodiment, a method of performing a switching process (for example, a network selection and a traffic steering) of switching a standby destination or a connection destination between a mobile communication network and a wireless LAN, will be described. Specifically, when a state is continued over a predetermined period where first information at a mobile communication network side satisfies a first condition and second information at a wireless LAN side satisfies a second condition, the switching process (for example, a network selection and a traffic steering) is performed.

In the first embodiment, the switching process includes both of: a process of switching a standby destination or a connection destination from a mobile communication network to a wireless LAN, and a process of switching a standby destination or a connection destination from the wireless LAN to the mobile communication network.

Here, the first information at a mobile communication network side is a measurement result (RSRPmeas) of a signal level of a received signal (RSRP: Reference Signal Received Power) and a measurement result (RSRQmeas) of a signal quality of a received signal (RSRQ: Reference Signal Received Quality), for example.

The second information at a wireless LAN side is a channel utilization value of a wireless LAN (ChannelUtilizationWLAN), a backhaul value of a downlink of a wireless LAN (BackhaulRateDIWLAN), a backhaul value of an uplink of a wireless LAN (BackhaulRateUIWLAN), and a signal level of a received signal (RSSI: Received Signal Strength Indicator), for example.

(Process of switching from mobile communication network to wireless LAN)

A first condition under which the standby destination or the connection destination is switched from the mobile communication network to the wireless LAN is that either one of the following condition (1a) or (1b) is satisfied, for example. It is noted that the first condition may be that all of the following conditions (1a) to (1b) are satisfied.

$$(1a)\ RSRPmeas < Thresh_{ServingOffloadWLAN,\ LowP}$$

$$(1b)\ RSRQmeas < Thresh_{ServingOffloadWLAN,\ LowQ}$$

It is noted that "$Thresh_{ServingOffloadWLAN,\ LowP}$" and "$Thresh_{ServingOffloadWLAN,\ LowQ}$" are threshold values provided from the radio base station 100 or previously determined threshold values.

A second condition under which the standby destination or the connection destination is switched from the mobile communication network to the wireless LAN is that all of the following conditions (1c) to (1f) are satisfied, for example. It is noted that the second condition may be that any one of the following conditions (1c) to (1f) is satisfied.

$$(1c)\ ChannelUtilizationWLAN < Thresh_{ChUtilWLAN,\ Low}$$

$$(1d)\ BackhaulRateDIWLAN > Thresh_{BackhRateDLWLAN,\ High}$$

$$(1e)\ BackhaulRateUIWLAN > Thresh_{BackhRateULWLAN,\ High}$$

$$(1f)\ RSSI > Thresh_{BEACONSRSSI,\ High}$$

It is noted that "$Thresh_{ChUtilWLAN,\ Low}$", "$Thresh_{BackhRateDLWLAN,\ High}$", "$Thresh_{BackhRateULWLAN,\ High}$", and "$Thresh_{BEACONSRSSI,\ High}$" are threshold values provided from the radio base station 100 or previously determined threshold values.

(Process of switching from wireless LAN to mobile communication network)

A first condition under which the standby destination or the connection destination is switched from the wireless LAN to the mobile communication network is that the following conditions (2a) and (2b) are satisfied, for example. It is noted that the first condition may be that either one of the following condition (2a) or (2b) is satisfied.

$$(2a)\ RSRPmeas > Thresh_{ServingOffloadWLAN,\ HighP}$$

$$(2b)\ RSRQmeas > Thresh_{ServingOffloadWLAN,\ HighQ}$$

It is noted that "Thresh$_{ServingOffloadWLAN,\ HighP}$" and "Thresh$_{ServingOffloadWLAN,\ HighQ}$" are threshold values provided from the radio base station 100 or previously determined threshold values.

A second condition under which the standby destination or the connection destination is switched from the wireless LAN to the mobile communication network is that any one of the following conditions (2c) to (2f) is satisfied, for example. It is noted that the second condition may be that all of the following conditions (2c) to (2f) are satisfied.

$$(2c)\ ChannelUtilizationWLAN > Thresh_{ChUtilWLAN,\ High}$$

$$(2d)\ BackhaulRateDlWLAN < Thresh_{BackhRateDLWLAN,\ Low}$$

$$(2e)\ BackhaulRateUlWLAN < Thresh_{BackhRateULWLAN,\ Low}$$

$$(2f)\ RSSI < Thresh_{BEACONSRSSI,\ Low}$$

It is noted that "Thresh$_{ChUtilWLAN,\ High}$", "Thresh$_{BackhRateDLWLAN,\ Low}$", "Thresh$_{BackhRateULWLAN,\ Low}$", and "Thresh$_{BEACONSRSSI,\ Low}$" are threshold values provided from the radio base station 100 or previously determined threshold values.

It is noted that when the above-described threshold values are not provided, the radio terminal 10 may omit to acquire (that is, receive or measure) information in which the threshold values are not provided.

In the first embodiment, the above-described various types of threshold values are examples of determination parameters for determining whether or not to perform a switching process of switching a standby destination or a connection destination between a mobile communication network and a wireless LAN. That is, the determination parameters include one or more values selected from among "Thresh$_{ServingOffloadWLAN,\ LowP}$", "Thresh$_{ServingOffloadWLAN,\ LowQ}$", "Thresh$_{ChUtilWLAN,\ Low}$", "Thresh$_{BackhRateDLWLAN,\ High}$", "Thresh$_{BackhRateULWLAN,\ High}$", "Thresh$_{BEACONSRSSI,\ High}$", "Thresh$_{ServingOffloadWLAN,\ HighP}$", "Thresh$_{ServingOffloadWLAN,\ HighQ}$", "Thresh$_{ChUtilWLAN,\ High}$", "Thresh$_{BackhRateDLWLAN,\ Low}$", "Thresh$_{BackhRateULWLAN,\ Low}$", and "Thresh$_{BEACONSRSSI,\ Low}$".

Further, the determination parameters may include a predetermined period (Tsteering$_{WLAN}$) in which a state should continue where the first condition or the second condition is satisfied. Alternatively, when an offload process is performed to switch the standby destination or the connection destination from the mobile communication network to the wireless LAN, the determination parameters may include a predetermined period (T350 timer value) during which the radio terminal 10 should hold dedicated parameters described later.

As the determination parameters, there are dedicated parameters individually notified from the radio base station 100 to the radio terminal 10 and broadcast parameters broadcast from the radio base station 100 to the radio terminal 10. The dedicated parameters are included in an RRC message (for example, RRC Connection Reconfiguration) transmitted from the radio base station 100 to the radio terminal 10, for example. The broadcast parameters are included in an SIB (for example, WLAN-OffloadConfig-r12) broadcast from the radio base station 100, for example. It should be noted that when receiving the dedicated parameters in addition to the broadcast parameters, the radio terminal 10 preferentially apply the dedicated parameters over the broadcast parameters.

(Radio terminal)

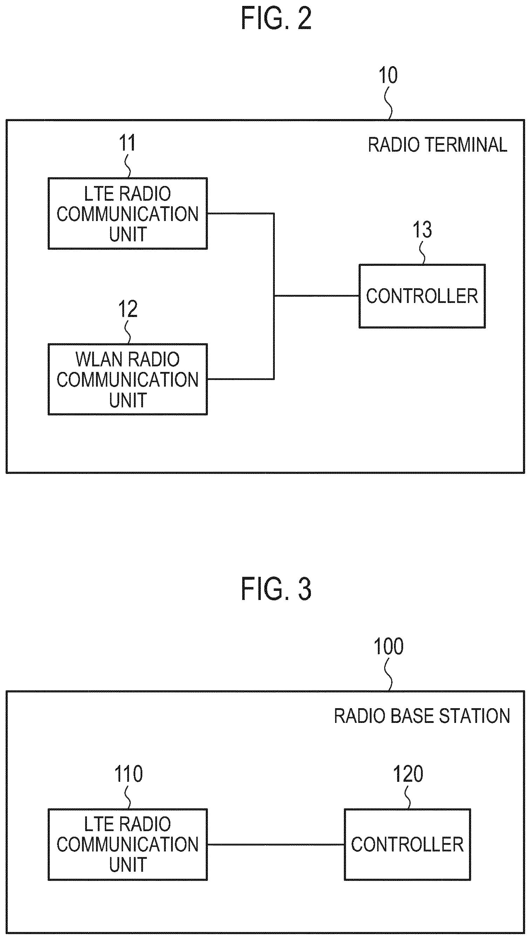

A radio terminal according to the first embodiment will be described, below. Fig. 2 is a block diagram showing the radio terminal 10 according to the first embodiment.

As shown in Fig. 2, the radio terminal 10 includes an LTE radio communication unit 11, a WLAN radio communication unit 12, and a controller 13.

The LTE radio communication unit 11 has a function of performing radio communication with the radio base station 100. For example, the LTE radio communication unit 11 regularly receives a reference signal from the radio base station 100. The LTE radio communication unit 11 regularly measures a signal level of a reference signal (RSRP) and a signal quality of a reference signal (RSRQ). The LTE radio communication unit 11 receives, as the determination parameters, the dedicated parameters and the broadcast parameters from the radio base station 100.

The WLAN radio communication unit 12 has a function of performing radio communication with the access point 200. For example, the WLAN radio communication unit 12 receives a beacon or a probe response from the access point 200. The beacon or the probe response includes a BBS Load information element, the channel utilization value of the wireless LAN (ChannelUtilizationWLAN) may be acquired from the BBS Load information element.

The WLAN radio communication unit 12 receives a response (GAS Response) returned from the access point 200 in response to a request (GAS (Generic Advertisement Service) Request) for the access point 200. The response (GAS Response) includes a backhaul value of a downlink of a wireless LAN (BackhaulRateDlWLAN) and a backhaul value of an uplink of a wireless LAN (BackhaulRateUlWLAN). Such an inquiry procedure is performed in accordance with ANQP (Access Network Query Protocol) defined in Hotspot2.0 of WFA (Wi-Fi Alliance).

The WLAN radio communication unit 12 receives a signal from the access point 200. The WLAN radio communication unit 12 measures a signal level of the received signal (RSSI). The signal level of the received signal (RSSI) is a signal intensity of the beacon or the probe response.

The controller 13 is configured by a CPU, a memory, etc., and controls the radio terminal 10. Specifically, when a state is continued over a predetermined period where the first information at a mobile communication network side satisfies the first condition and the second information at a wireless LAN side satisfies the second condition, the controller 13 executes a switching process of switching the standby destination or the connection destination between the mobile communication network and the wireless LAN.

In the first embodiment, when performing an onload process of performing a connection process on the same cell as the cell to which dedicated parameters are notified after performing an offload process in which the standby destination or the connection destination is switched from the mobile communication network to the wireless LAN, the controller 13 discards the dedicated parameters.

In particular, as a general rule, in a period (T350 timer value) during which the predetermined timer (the above-described (T350 timer)) that is started in response to the transition to an idle state along with the offload process is started, the controller 13 is configured to hold the dedicated parameters. In other words, the controller 13 is configured to discard the dedicated parameters when a predetermined timer expires or a predetermined timer stops.

In such a case, the controller 13 preferably stops a predetermined timer when performing the onload process after performing the offload process. For example, the controller 13 preferably stops a predetermined timer when performing the onload process due to a quality deterioration of the wireless LAN after performing the offload process. The quality deterioration of a wireless LAN is that any one of the above-described conditions (2c) to (2f) is satisfied. It is noted that the second condition may be that all of the conditions (2c) to (2f) are satisfied, as described above.

In other words, the controller 13 may not stop a predetermined timer, when performing the connection process on the same cell as the cell which notifies the dedicated parameters, resulting from a need of connecting to the mobile communication network as a result of activation of a call application, etc. That is, the controller 13 does not discard the dedicated parameters but holds the same, and along with the end of the call application, etc. determines whether or not to perform the offload process on the basis of the dedicated parameters. As a result, a state is continued where the radio terminal 10 is easily guided to the wireless LAN side, for example, such that a load of the mobile communication network is reduced. (Radio base station)

(Radio base station)

The radio base station according to the first embodiment will be described, below. Fig. 3 is a block diagram showing the radio base station 100 according to the first embodiment.

As shown in Fig. 3, the radio base station 100 has an LTE radio communication unit 110 and a controller 120.

The LTE radio communication unit 110 has a function of performing radio communication with the radio terminal 10. For example, the LTE radio communication unit 110 regularly transmits a reference signal to the radio terminal 10. The LTE radio communication unit 110 transmits, as the determination parameters, the dedicated parameters and the broadcast parameters to the radio terminal 10. As described above, the LTE radio communication unit 110 notifies the radio terminal 10, by the RRC message (for example, RRC Connection Reconfiguration), of the dedicated parameters, and notifies the radio terminal 10, by the SIB (for example, WLAN-OffloadConfig-r12), of the broadcast parameters.

The controller 120 is configured by a CPU, a memory, etc., and controls the radio base station 100. It should be noted that in the first embodiment, when the radio terminal 10 performs the offload process or when the radio terminal 10 is transitioned to an idle state, the controller 120 discards the dedicated parameters notified to the radio terminal 10 in which the offload process is performed. Here, the controller 120 of the radio base station 100 may not be capable of grasping whether or not a reason why the radio terminal 10 transitions to the idle state is the process of switching to the wireless LAN. Therefore, it should be noted that when the radio terminal 10 transitions to the idle state, the controller 120 may discard the dedicated parameters irrespective of the reason for transition to the idle state.

(Determination of switching process)

Below, determination of the switching process will be described by using a process of switching from a mobile communication network to a wireless LAN, for example.

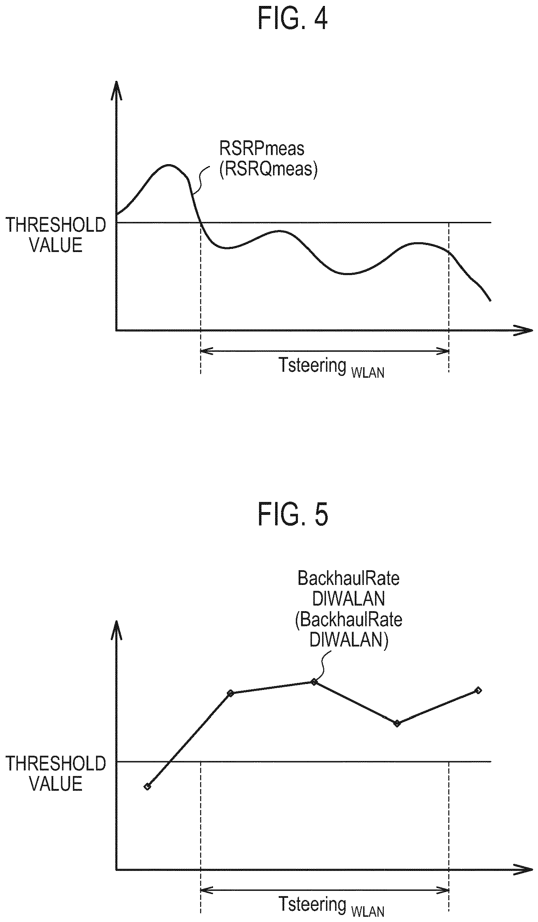

Firstly, a method of determining whether or not a state where the first information satisfies the first condition is continued over a predetermined period (Tsteering$_{WLAN}$) will be described. The first information is a measurement result (RSRPmeas) of a signal level (RSRP) of a reference signal or a measurement result (RSRQmeas) of a signal quality (RSRP) of a reference signal, the reference signal is received regularly in a short cycle, and the RSRPmeas or the RSRQmeas is measured in a relatively short cycle. That is, as shown in Fig. 4, the RSRPmeas or the RSRQmeas is acquired continuously in a time-axis direction.

Secondly, a method of determining whether or not a state where the second information satisfies the second condition is continued over a predetermined period (Tsteering$_{WLAN}$) will be described. There is no fixed rule about a cycle in which the second information is acquired. That is, as shown in Fig. 5, the second information (for example, BackhaulRateDlWLAN or BackhaulRateUlWLAN) is acquired discretely in a time-axis direction.

(Communication method)

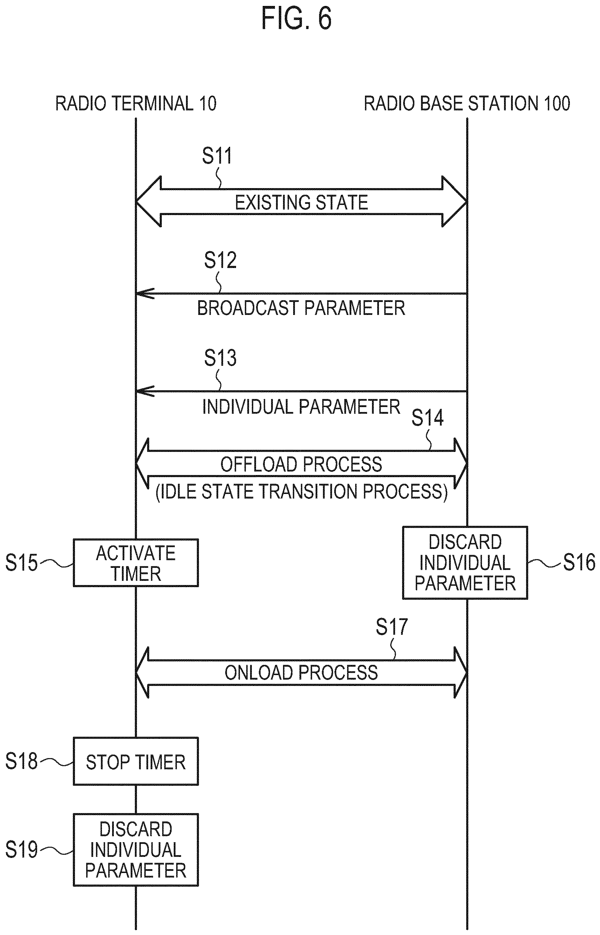

A communication method according to the first embodiment will be described, below. Fig. 6 is a sequence diagram showing the communication method according to the first embodiment. Here, a case where the onload process is performed after the offload process is performed will be described.

In step S11, as shown in Fig. 6, the radio terminal 10 exists in the radio base station 100. "Existing" may mean a standby state (RRC idle state) for a cell managed by the radio base station 100, and a connected state (RRC connected state) where the radio terminal 10 is connected to a cell managed by the radio base station 100.

In step S12, the radio terminal 10 receives, as the determination parameters, the broadcast parameters from the radio base station 100. The broadcast parameters are included in an SIB (for example, WLAN-OffloadConfig-r12) broadcast from the radio base station 100, as described above.

In step S13, the radio terminal 10 receives, as the determination parameters, the dedicated parameters from the radio base station 100. The broadcast parameters are included in an RRC message (for example, RRC Connection Reconfiguration) broadcast from the radio base station 100, as described above.

In step S14, the radio terminal 10 determines on the basis of the dedicated parameters whether or not the above-described first condition (condition (1a) or (1b)) and second condition (conditions (1c) to (1f)) are satisfied. Here, the radio terminal 10 determines that the first condition and the second condition are satisfied, and performs the offload process (idle state transition process) of switching the standby destination or the connection destination from the mobile communication network to the wireless LAN.

In step S15, the radio terminal 10 stars a predetermined timer (the above-described (T350 timer)) to transition to the idle state along with the offload process. The radio terminal 10 is configured to hold the dedicated parameters in a period (T350 timer value) during which a predetermined timer (the above-described (T350 timer)) is started.

In step S16, the radio base station 100 discards the dedicated parameters notified to the radio terminal 10 that transitions to the idle state along with the offload process.

In step S17, the radio terminal 10 determines on the basis of the dedicated parameters whether or not the above-described first condition (condition (2a) or (2b)) and second condition (conditions (2c) to (2f)) are satisfied. Here, the radio terminal 10 determines that the first condition and the second condition are satisfied, and performs the onload process of performing a connection process on the same cell as the cell which notifies the dedicated parameters.

In step S18, the radio terminal 10 stops the predetermined timer (the above-described (T350 timer)).

In step S19, the radio terminal 10 discards the dedicated parameters received individually from the radio base station 100. Specifically, the radio terminal 10 discards the dedicated parameters along with the stopping of the predetermined timer (the above-described (T350 timer)). In other words, the radio terminal 10 discards the dedicated parameters even before the predetermined timer (the above-described (T350 timer)) expires.

Here, a cause of the onload process preferably is a quality deterioration of a wireless LAN. In other words, when it becomes necessary to connect to the mobile communication network by activation of a call application, for example, the radio terminal 10 may not need to perform a process of stopping the predetermined timer (the above-described (T350 timer)).

(Operation and Effect)

In the first embodiment, the radio terminal 10 discards the dedicated parameters when performing the onload process after performing the offload process. The radio terminal 10 discards the dedicated parameters, and thus, when receiving new broadcast parameters, as the determination parameters, from the radio base station 100, determines on the basis of the new broadcast parameters whether to perform the switching process. Therefore, when broadcasting the broadcast parameters again, the radio base station 100 is capable of controlling the switching process of the radio terminal 10, and as a result, it is possible to suppress occurrence of a situation where the radio terminal 10 uses the dedicated parameters not grasped by the radio base station 100.

It should be noted that when the radio terminal 10 holds the dedicated parameters, even when receiving, as the determination parameters, the broadcast parameters from the radio base station 100, the dedicated parameters are prioritized over the broadcast parameters, and thus, the dedicated parameters not grasped by the radio base station 100 is used in the radio terminal 10.

[First Modification]

A first modification of the first embodiment will be described, below. Description proceeds with a particular focus on a difference from the first embodiment, below.

In the first embodiment, the radio terminal 10 (controller 13) discards the dedicated parameters when performing the onload process after performing the offload process. On the other hand, in the first modification, when performing the onload process after performing the offload process, the radio terminal 10 (LTE radio communication unit 11) transmits information (a parameters status) indicating a state of the dedicated parameters to the radio base station 100. The parameters status (information indicating a state of the dedicated parameters) is at least either one of information indicating whether or not the radio terminal 10 holds the dedicated parameters or information indicating values of the dedicated parameters held by the radio terminal 10.

It is noted that the radio terminal 10 may include the parameters status, into the RRC message (RRC Connection Setup) transmitted to the radio base station 100. The radio terminal 10 may transmit the parameters status to the radio base station 100 in the onload process performed after the offload process is performed.

(Communication method)

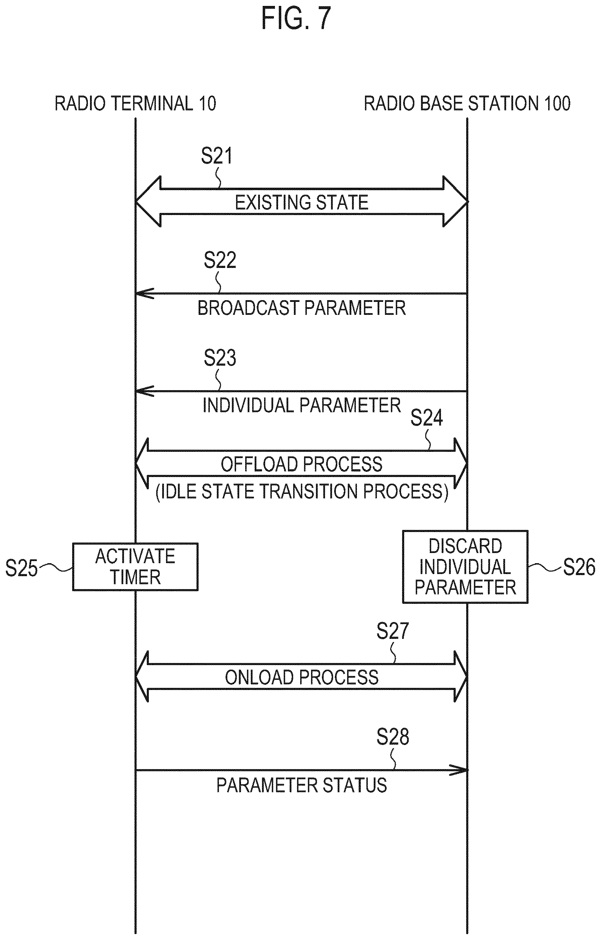

A communication method according to the first modification will be described, below. Fig. 7 is a sequence diagram showing the communication method according to the first modification. Here, a case where the onload process is performed after the offload process is performed will be described.

In step S21, as shown in Fig. 7, the radio terminal 10 exists in the radio base station 100. "Existing" may mean a standby state (RRC idle state) for a cell managed by the radio base station 100, and a connected state (RRC connected state) where the radio terminal 10 is connected to a cell managed by the radio base station 100.

In step S22, the radio terminal 10 receives, as the determination parameters, the broadcast parameters from the radio base station 100. The broadcast parameters are included in an SIB (for example, WLAN-OffloadConfig-r12) broadcast from the radio base station 100, as described above.

In step S23, the radio terminal 10 receives, as the determination parameters, the dedicated parameters from the radio base station 100. The broadcast parameters are included in an RRC message (for example, RRC Connection Reconfiguration) broadcast from the radio base station 100, as described above.

In step S24, the radio terminal 10 determines on the basis of the dedicated parameters whether or not the above-described first condition (condition (1a) or (1b)) and second condition (conditions (1c) to (1f)) are satisfied. Here, the radio terminal 10 determines that the first condition and the second condition are satisfied, and performs the offload process (idle state transition process) of switching the standby destination or the connection destination from the mobile communication network to the wireless LAN.

In step S25, the radio terminal 10 starts a predetermined timer (the above-described (T350 timer)) to transition to the idle state along with the offload process. The radio terminal 10 is configured to hold the dedicated parameters in a period (T350 timer value) during which a predetermined timer (the above-described (T350 timer)) is started.

In step S26, the radio base station 100 discards the dedicated parameters notified to the radio terminal 10 transitioned to the idle state along with the offload process.

In step S27, the radio terminal 10 determines on the basis of the dedicated parameters whether or not the above-described first condition (condition (2a) or (2b)) and second condition (conditions (2c) to (2f)) are satisfied. Here, the radio terminal 10 determines that the first condition and the second condition are satisfied, and performs the onload process of performing a connection process on the same cell as the cell which notifies the dedicated parameters. Alternatively, in the first modification, when it becomes necessary to connect to the mobile communication network by activation of a call application, for example, the radio terminal 10 may perform a process of connecting to the mobile communication network (that is, the onload process).

In step S28, the radio terminal 10 transmits the information (a parameters status) indicating a state of the dedicated parameters, to the radio base station 100. The parameters status is, as described above, at least either one of information indicating whether or not the radio terminal 10 holds the dedicated parameters or information indicating a value of the dedicated parameters held by the radio terminal 10.

(Operation and Effect)

In the embodiment, the radio terminal 10 transmits the parameters status to the radio base station 100 when performing the onload process after performing the offload process. Therefore, when the information indicating whether or not the radio terminal 10 holds the dedicated parameters as the parameters status is used, the radio base station 100 is capable of specifying the radio terminal 10 that holds the dedicated parameters not grasped by the radio base station 100. That is, when broadcasting the dedicated parameters again to the radio terminal 10 that holds the dedicated parameters, the radio base station 100 is capable of controlling the switching process of the radio terminal 10, and as a result, it is possible to suppress occurrence of a situation where the radio terminal 10 uses the dedicated parameters not grasped by the radio base station 100. It is noted that naturally, when as the information indicating a state of the dedicated parameters, the information indicating a value of the dedicated parameters held by the radio terminal 10 is used, the radio base station 100 is capable of grasping the dedicated parameters held by the radio terminal 10.

Here, it should be noted that when, as the information indicating a state of the dedicated parameters, the information indicating a value of the dedicated parameters held by the radio terminal 10 is received from the radio terminal 10, the radio base station 100 (controller 120) stores the value of the dedicated parameters in a manner to associate with a C-RNTI (Radio Network Temporary Identifier) for identifying the radio terminal 10 in the cell managed by the radio base station 100.

[Second Modification]

A second modification of the first embodiment will be described, below. Description proceeds with a particular focus on a difference from the first embodiment, below.

In the first embodiment, when the radio terminal 10 performs the offload process, the radio base station 100 (controller 120) discards the dedicated parameters notified to the radio terminal 10 that performs the offload process. On the other hand, in the second modification, when the radio terminal 10 performs the offload process, the radio base station 100 (controller 120) holds the dedicated parameters notified to the radio terminal 10 that performs the offload process over a constant period since the offload process or transitions to the idle state is made. Here, the radio base station 100 (controller 120) may not be capable of grasping whether not a reason why the radio terminal 10 transitions to the idle state is the process of switching to the wireless LAN. Therefore, it should be noted that when the radio terminal 10 transitions to the idle state, the radio base station 100 (controller 120) may hold the dedicated parameters over a constant period irrespective of the reason for transition to the idle state.

Here, it is preferable that the constant period during which the radio base station 100 should hold the dedicated parameters is longer than the period (the above-described T350 timer value) during which the radio terminal 10 is defined to hold the dedicated parameters.

In the second modification, the radio base station 100 (controller 120) preferably holds the dedicated parameters notified to the radio terminal 10 that performs the offload process or transitions to the idle state in a manner to associate with the identification information assigned to the radio terminal 10 before performing the offload process or transitioning to the idle state. The identification information assigned to the radio terminal 10 before performing the offload process or transitioning to the idle state is the C-RNTI (Radio Network Temporary Identifier) for identifying the radio terminal 10 in the cell managed by the radio base station 100, for example. It is preferable that when performing the onload process after performing the offload process, the radio terminal 10 notifies the radio base station 100 of the identification information assigned to the radio terminal 10 before performing the offload process.

(Communication method)

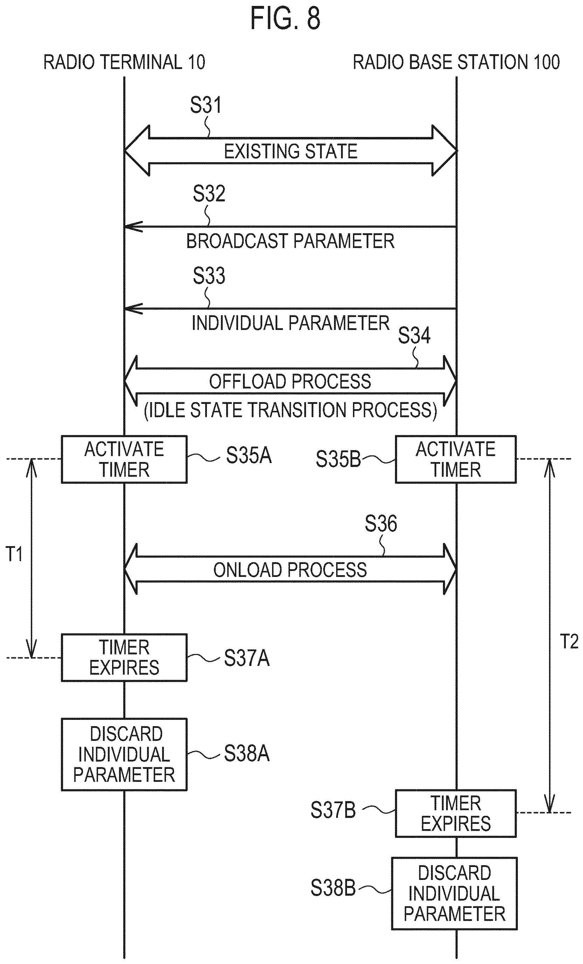

A communication method according to the second modification will be described, below. Fig. 8 is a sequence diagram showing the communication method according to the second modification. Here, a case where the onload process is performed after the offload process is performed will be described.

In step S31, as shown in Fig. 8, the radio terminal 10 exists in the radio base station 100. "Existing" may mean a standby state (RRC idle state) for a cell managed by the radio base station 100, and a connected state (RRC connected state) where the radio terminal 10 is connected to a cell managed by the radio base station 100.

In step S32, the radio terminal 10 receives, as the determination parameters, the broadcast parameters from the radio base station 100. The broadcast parameters are included in an SIB (for example, WLAN-OffloadConfig-r12) broadcast from the radio base station 100, as described above.

In step S33, the radio terminal 10 receives, as the determination parameters, the dedicated parameters from the radio base station 100. The broadcast parameters are included in an RRC message (for example, RRC Connection Reconfiguration) broadcast from the radio base station 100, as described above.

In step S34, the radio terminal 10 determines on the basis of the dedicated parameters whether or not the above-described first condition (condition (1a) or (1b)) and second condition (conditions (1c) to (1f)) are satisfied. Here, the radio terminal 10 determines that the first condition and the second condition are satisfied, and performs the offload process (idle state transition process) of switching the standby destination or the connection destination from the mobile communication network to the wireless LAN.

In step S35A, the radio terminal 10 starts the predetermined timer (the above-described (T350 timer)). Here, a period T1 is set to the predetermined timer.

In step S35B, the radio base station 100 starts the predetermined timer. The predetermined timer is a timer of measuring a period during which the dedicated parameters notified to the radio terminal 10 that performs the offload process should be held. Here, a period T2 longer than the period T1 is set to the predetermined timer. It is noted that the period T2 may be at least equal to or longer than the T1, and may be identical to the T1. Further, in such a case, the T350 timer may be used for the predetermined timer. Here, when the radio base station 100 is capable of detecting that the radio terminal 10 performs the offload process, the radio base station 100 may start the predetermined timer in accordance with the detection of the offload process. Alternatively, when detecting that the radio terminal 10 transitions to the idle state, the radio base station 100 may start the predetermined timer in accordance with the detection of the transition to the idle state.

In step S36, the radio terminal 10 determines on the basis of the dedicated parameters whether or not the above-described first condition (condition (2a) or (2b)) and second condition (conditions (2c) to (2f)) are satisfied. Here, the radio terminal 10 determines that the first condition and the second condition are satisfied, and performs the onload process of performing a connection process on the same cell as the cell which notifies the dedicated parameters.

In step S37A, the predetermined timer to which the period T1 is set in step 35A expires. In step 38A, the radio terminal 10 discards the dedicated parameters notified individually from the radio base station 100.

In step S37B, the predetermined timer to which the period T2 (> period T1) is set in step 35B expires. In step 38B, the radio base station 100 discards the dedicated parameters notified to the radio terminal 10 that performs the offload process. The radio base station 100 may discard the identification information (for example, C-RNTI) of the radio terminal 10 made to correspond to the dedicated parameters.

(Operation and Effect)

In the second modification, the radio base station 100 holds the dedicated parameters notified to the radio terminal 10 that performs the offload process or transitions to the idle state over a constant period since the offload process is performed or transition to the idle state is made. Therefore, even when the radio terminal 10 performs the onload process after performing the offload process, a possibility is increased that the radio base station 100 holds the dedicated parameters notified to the radio terminal 10 that performs the offload process. In other words, occurrence of a situation is suppressed where the radio terminal 10 uses the dedicated parameters not grasped by the radio base station 100.

It should be noted that in the second modification, the constant period during which the radio base station 100 should hold the dedicated parameters is longer than the period (the above-described T350 timer value) in which the radio terminal 10 is configured to hold the dedicated parameters, and thus, a situation where the radio terminal 10 uses the dedicated parameters not grasped by the radio base station 100 does not occur.

[Other Embodiments]

The present invention is explained through the above-described embodiments, but it must not be understood that this invention is limited by the statements and the drawings constituting a part of this disclosure. From this disclosure, various alternative embodiments, examples, and operational technologies will become apparent to those skilled in the art.

In the first embodiment, when performing the onload process of performing a connection process on the same cell as the cell which notifies the dedicated parameters after performing the offload process, the controller 13 of the radio terminal 10 discards the dedicated parameters. On the other hand, also when performing a connection process on a cell different from the cell which notifies the dedicated parameters after performing the offload process, the controller 13 of the radio terminal 10 may discard the dedicated parameters.

Further, when discarding the dedicated parameters, the radio base station 100 may notify the radio terminal 10 of the discard. In this case, the radio terminal 10 may discard the dedicated parameters upon reception of the notification that the dedicated parameters from the radio base station 100 is discarded. Further, the radio base station 100 may instruct the radio terminal 10 to discard the dedicated parameters from the radio base station 100.

Although not particularly mentioned in the embodiments, a program may be provided to cause a computer to execute each process performed by the radio terminal 10 and the radio base station 100. Furthermore, the program may be recorded on a computer-readable medium. By using the computer-readable medium, it is possible to install the program in a computer. Here, the computer-readable medium recording the program thereon may include a non-transitory recording medium. The non-transitory recording medium is not particularly limited; the non-transitory recording medium may include a recording medium such as a CD-ROM or a DVD-ROM, for example.

Alternatively, a chip may be provided which is configured by: a memory in which a program for performing each process performed by the radio terminal 10 and the radio base station 100 is stored; and a processor for executing the program stored in the memory.

In an embodiment, LTE is exemplified as the mobile communication network. However, the embodiment is not limited thereto. It may suffice when the mobile communication network is a network provided by a communication carrier. Therefore, the mobile communication network may be Release 99 and may be GSM.

[Contribution]

1. Introduction

Handling of dedicated parameters upon connection setup is a remaining issue of WLAN/3GPP Radio Interworking. 2 alternatives are provided for UE behavior upon connection setup.

Alt. 1, UE keeps dedicated RAN assistance parameters.
Alt. 2, UE discards dedicated RAN assistance parameters.

In this contribution, each alternative is analyzed from various perspectives and we provide our view of the best compromised solution.

2. Discussion

According to the current agreements in the CR, even if T350 is still running, dedicated RAN assistance parameters shall be discarded upon connection setup.

Based on the current agreements, it has already been established that whenever the UE reselects another cell, the UE shall discard the dedicated RAN assistance parameters. And one of the principal behind this agreement is that whenever there is a cell change the target cell should have the responsibility to control the UE behavior. However, for the issue with connection setup, the UE is simply transitioning from IDLE to CONNECTED, but within the same cell. Therefore, it is still FFS whether the UE should discard the dedicated RAN assistance parameters upon connection setup.

There are basically two alternatives that RAN2 should consider:

Alt. 1 UE keeps dedicated RAN assistance parameters
Alt. 2 UE discards dedicated RAN assistance parameters

There may be merits and demerits in each alternative. Therefore, both alternatives should be further analyzed from several different aspects to arrive at the proper solution.

2.1. Signaling overhead

With dedicated RAN assistance parameters, the RAN may control the UEs independently depending on RAN load, the amount of UE traffic, CQI associated with UE's data bearer and so on. If the UE does not keep the dedicated parameters upon connection setup, it is possible that the RAN provides the same dedicated parameters to the UE in case the RAN or WLAN conditions remain unchanged.

Observation 1: The same dedicated RAN assistance parameters may only be used if the RAN and WLAN conditions remain unchanged prior to T350 expiry.

2.2. UE controllability

In many situations, the T350 may be configured for up to 180 minutes. In such case, it may not be appropriate to assume that RAN or WLAN conditions do not change before the T350 is expired. And if the RAN or WLAN condition changes it may be necessary to update the UE with different dedicated RAN assistance parameters than those previously configured to the UE. For example, if RAN load changes, RAN should be allowed to update the UE with new parameters for better UE control.

Currently it is assumed that RAN may control the UE's traffic steering behavior through either dedicated signaling or broadcast. With Alt. 2 the RAN always knows which UEs are controlled by dedicated signaling and which UEs are controlled by broadcast.

However, if Alt.1 is specified, RAN does not always know which UE's has the dedicated parameters since some of the Connected UEs may retain the dedicated RAN assistance parameters previously configured, and it is assumed that the RAN does not retain the UE's context information after the UE transitions to IDLE. Up till T350 expiry, RAN would not have control over those connected UEs which keep the previously configured dedicated parameters. If the RAN wants to have full control of all UEs at any given time, it may be necessary for the RAN to configure all Connected UEs with dedicated signaling, just to be sure that no UE is still using the previously configured dedicated parameters.

Observation 2: If RAN or WLAN condition changes, discarding parameters is preferable for UE controllability.

2.3. Ping-ponging avoidance

Assuming the UE discards the dedicated parameters upon connection setup, it is assumed that the UE will steer traffic from WLAN to RAN. And if the RAN or WLAN conditions are unchanged, the RAN may configure the same dedicated parameters to the UE. As a result, the UE may select and steers traffic to the same WLAN again and ping-ponging may occur. Specifically, there are 2 possibilities to consider for the occurrence of ping-ponging with Alt. 2.

First possibility: RAN provides up-to-date dedicated parameters to the UE.

Whether RAN provides dedicated parameters and what values are provided depend on RAN or WLAN conditions (e.g. RAN load). If some condition changes, RAN may not configure the UE with dedicated parameters. Even if the RAN does configure the UE with dedicated signaling, the values may change. If RAN provides different parameters (easy to select WLAN), UE may steer traffic back to WLAN again. However, this behavior is preferable from network stand point since this is a result by up-to-date RAN conditions.

Second possibility: RAN provides the same dedicated parameters to the UE.

Assuming the UE discards the dedicated parameters and the RAN reconfigures the UE with the same dedicated parameters. It is questionable whether UE will select the same WLAN even If the UE is still on the WLAN coverage. It may be assumed that one of the main reasons for the UE to initiate connection setup is due to the deterioration of WLAN based according to the thresholds previously configured to the UE. And the UE wants to steer the WLAN traffic to the RAN. So even if the RAN configures the UE with the same dedicated parameters ping-ponging would not occur.

However, it is true that if the cause of the connection setup is due to e.g. voice call, ping-ponging could likely occur.

Observation 3: If the cause of connection setup is due to WLAN deterioration, ping-ponging is unlikely even if the UE discards the previously configured dedicated parameters and are reconfigured with the same parameters upon connection setup. If UE steers traffic to WLAN again caused by the up-to-date RAN assistance parameters, it is good for load balancing from network perspective.

Observation 4: If the cause of connection setup is service initiation, discarding dedicated parameters may cause ping-ponging.

2.4. Compromised solution

From the observations above, it is clear that there isn't a single UE behavior that will solve all the problems under all scenarios. So it really comes down to choosing which UE behavior will provide the best compromised solution.

The positive aspect of keeping dedicated parameters is that ping-ponging can be avoided in some scenarios. However, as discussed in section 2.3, ping-ponging avoidance is not the best all the time especially for network.

If dedicated parameters are discarded upon connection setup, ping-ponging is unavoidable in some scenarios, but the more important thing is that the discarding of the dedicated parameters would be in-line with the existing UE and network behavior (i.e., network is in full control of connected UEs). The RAN could reject the UE's connection if the RAN's congestion is really bad, and that is not a new behavior for the network. The network already understands it is supposed to take full responsibilities for its UEs. The worst thing for the network is when a UE is in connected, but not controllable by the network.

Therefore, Alt.2 should be adopted as the better compromised solution.

Proposal 1: UE shall discard dedicated RAN assistance parameters upon connection setup.

3. Conclusion

In this contribution, we analysed Alt.1 or Alt.2 from various perspectives and we provide our view of the best compromised solution. We reached following Observations and Proposal.

Observation 1: The same dedicated RAN assistance parameters may only be used if the RAN and WLAN conditions remain unchanged prior to T350 expiry.

Observation 2: If RAN or WLAN condition changes, discarding parameters is preferable for UE controllability.

Observation 3: If the cause of connection setup is due to WLAN deterioration, ping-ponging is unlikely even if the UE discards the previously configured dedicated parameters and are reconfigured with the same parameters upon connection setup. If UE steers traffic to WLAN again caused by the up-to-date RAN assistance parameters, it is good for load balancing from network perspective.

Observation 4: If the cause of connection setup is service initiation, discarding dedicated parameters may cause ping-ponging.

Proposal 1: UE shall discard dedicated RAN assistance parameters upon connection setup.

[Cross-reference]

The entire content of US Provisional Application No. 62/055428 (filed on September 25, 2014) is incorporated in the present specification by reference.

**INDUSTRIAL APPLICABILITY**

The present invention is useful in radio communications field.

**Claims**

1. A radio terminal that performs traffic steering between a mobile communication network and a wireless LAN, comprising:

   a receiver configured to receive, as determination parameters for determining whether or not to perform the traffic steering, dedicated parameters notified individually from a cell provided in the mobile communication network; and
   a controller configured to discard the dedicated parameters when performing a connection process on the cell after transition to an idle state on the cell.

2. The radio terminal according to claim 1, wherein
   the controller holds the dedicated parameters in a period during which a predetermined timer started in response to the transition to the idle state is running, and
   the controller stops the predetermined timer when performing the connection process after transition to the idle state.

3. The radio terminal according to claim 2, wherein
   the controller stops the predetermined timer when performing the connection process due to quality deterioration of the wireless LAN after transition to the idle state.

4. The radio terminal according to claim 2, wherein
   the controller discards the dedicated parameters along with the stopping of the timer.

EP 3 185 618 A1

FIG. 1

# FIG. 2

10

RADIO TERMINAL

11

LTE RADIO
COMMUNICATION
UNIT

12

WLAN RADIO
COMMUNICATION
UNIT

13

CONTROLLER

# FIG. 3

100

RADIO BASE STATION

110

LTE RADIO
COMMUNICATION
UNIT

120

CONTROLLER

# FIG. 4

RSRPmeas
(RSRQmeas)

THRESHOLD
VALUE

Tsteering $_{WLAN}$

# FIG. 5

BackhaulRate
DIWALAN
(BackhaulRate
DIWALAN)

THRESHOLD
VALUE

Tsteering $_{WLAN}$

# FIG. 6

RADIO TERMINAL 10                    RADIO BASE STATION 100

S11
← EXISTING STATE →

S12
BROADCAST PARAMETER

S13
INDIVIDUAL PARAMETER    S14

← OFFLOAD PROCESS →
(IDLE STATE TRANSITION PROCESS)

S15 — | ACTIVATE TIMER |          | DISCARD INDIVIDUAL PARAMETER | — S16

S17
← ONLOAD PROCESS →

S18 — | STOP TIMER |

S19 — | DISCARD INDIVIDUAL PARAMETER |

# FIG. 7

RADIO TERMINAL 10        RADIO BASE STATION 100

S21

EXISTING STATE

S22

BROADCAST PARAMETER

S23

INDIVIDUAL PARAMETER

S24

OFFLOAD PROCESS
(IDLE STATE TRANSITION PROCESS)

S25 —| ACTIVATE TIMER |

| DISCARD INDIVIDUAL PARAMETER | — S26

S27

ONLOAD PROCESS

S28

PARAMETER STATUS

# FIG. 8

RADIO TERMINAL 10                    RADIO BASE STATION 100

S31

⟵ EXISTING STATE ⟶

S32

← BROADCAST PARAMETER

S33

← INDIVIDUAL PARAMETER  S34

⟵ OFFLOAD PROCESS ⟶
(IDLE STATE TRANSITION PROCESS)

| ACTIVATE TIMER | S35A | S35B | ACTIVATE TIMER |

S36

⟵ ONLOAD PROCESS ⟶

T1

| TIMER EXPIRES | S37A |

| DISCARD INDIVIDUAL PARAMETER | S38A |

T2

S37B | TIMER EXPIRES |

S38B | DISCARD INDIVIDUAL PARAMETER |

**INTERNATIONAL SEARCH REPORT**

| International application No. |
|---|
| PCT/JP2015/076680 |

A. CLASSIFICATION OF SUBJECT MATTER
*H04W48/18*(2009.01)i, *H04W84/12*(2009.01)i, *H04W88/06*(2009.01)i

According to International Patent Classification (IPC) or to both national classification and IPC

B. FIELDS SEARCHED

Minimum documentation searched (classification system followed by classification symbols)
H04W4/00-99/00, H04B7/24-7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | Ericsson, RAN assistance parameter handling,<br>3GPP TSG-RAN WG2#87 R2-143320, 2014.08.18 | 1<br>2-4 |
| X<br>Y | Ericsson, WLAN availability evaluation criterion and handling of thresholds, 3GPP TSG-RAN WG2 #85 Tdoc R2-140451, 2014.02.10 | 1<br>2,4 |
| Y | LG Electronics Inc., Handling of the RAN assistance information, 3GPP TSG-RAN2 Meeting #87 R2- 143723, 2014.08.18 | 2-4 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 November 2015 (27.11.15) | 08 December 2015 (08.12.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (July 2009)

**REFERENCES CITED IN THE DESCRIPTION**

**Patent documents cited in the description**

• US 62055428 B